# EUROPEAN PATENT SPECIFICATION

(11) **EP 1 251 766 B1**
(45) Date of publication and mention of the grant of the patent: **17.09.2008**
(21) Application number: 00984080.2
(22) Date of filing: 08.12.2000
(51) Int. Cl.: A47L 13/16, A47L 13/20, D04H 13/00

(54) **NON-APERTURED CLEANING SHEETS HAVING NON-RANDOM MACROSCOPIC THREE-DIMENSIONAL CHARACTER**
REINIGUNGSTUCH OHNE ÖFFNUNGEN MIT EINER DREIDIMENSIONALEN MAKROSKOPISCHEN REGELMÄSSIGEN STRUKTUR
FEUILLES DE NETTOYAGE SANS OUVERTURES A CONFORMATION TRIDIMENSIONNELLE MACROSCOPIQUE NON ALEATOIRE

(30) Priority: 10.12.1999 US 170245 P
(43) Date of publication of application: 30.10.2002
(73) Proprietor: THE PROCTER & GAMBLE COMPANY, Cincinnati, Ohio 45202 (US)
(72) Inventor: WONG, Arthur, West Chester, OH 45069 (US); FERESHTEHKOU, Saeed, Cincinnati, OH 45243 (US)
(74) Representative: Engisch, Gautier
(86) International application number: PCT/US2000/033349
(87) International publication number: WO 2001/041622

(56) References cited:
- EP-A- 0 696 432
- EP-A- 0 750 063
- EP-A- 0 863 240
- EP-A- 0 865 755
- EP-A- 0 926 288
- WO-A-98/52458
- US-A- 3 616 157
- US-A- 3 965 518
- US-A- 5 275 700
- US-A- 5 525 397
- US-A- 5 725 927
- PATENT ABSTRACTS OF JAPAN vol. 017, no. 364 (C-1081), 9 July 1993 (1993-07-09) & JP 05 056902 A (KAO CORP), 9 March 1993 (1993-03-09)

## Description

### CROSS-REFERENCE TO RELATED APPLICATION

This application claims the benefit of U.S. Provisional Application Serial No. 60/170,245 filed December 10, 1999 by A. Wong et al.

### FIELD OF THE INVENTION

This invention relates to non-apertured cleaning sheets particularly suitable for removal and entrapment of dust, lint, hair, sand, food crumbs, grass and the like.

### BACKGROUND OF THE INVENTION

The use of nonwoven sheets for dry dust-type cleaning are known in the art. Such sheets typically utilize a composite of fibers where the fibers are bonded via adhesive, entangling or other forces. See, for example, U.S. Patent No. 3,629,047 and U.S. Patent 5,144,729. To provide a durable wiping sheet, reinforcement means have been combined with the staple fibers in the form of a continuous filament or network structure. See, for example, U.S. Patent No. 4,808,467, U.S. Patent 3,494,821 and U.S. Patent No. 4,144,370. Also, to provide a product capable of withstanding the rigors of the wiping process, prior nonwoven sheets have employed strongly bonded fibers via one or more of the forces mentioned above. While durable materials are obtained, such strong bonding may adversely impact the materials' ability to pick up and retain particulate dirt.

In an effort to address this concern, U.S. Patent 5,525,397 issued June 11, 1996 to Shizuno et al., describes a cleaning sheet comprising a polymeric network layer and at least one nonwoven layer, wherein the two layers are lightly hydroentangled so as to provide a sheet having a low entanglement coefficient. The resulting sheet is said to provide strength and durability, as well as improved dust collecting performance because the composite fibers are lightly hydroentangled. While the sheets described in the '397 patent are alleged to address some of the problems with prior nonwoven cleaning sheets, those sheets appear to be generally of a uniform basis weight, at least on a macroscopic level; and are essentially of a uniform caliper, again on a macroscopic level. The result of a sheet having a uniform basis weight is that the material is not particularly suitable for collecting and entrapping soil of a diverse size, shape, etc.

To improve the suitability of cleaning sheets to collect and entrap soil of diverse size, PCT Applications WO 98/52458 and WO 98/52459, assigned to The Procter & Gamble Co., teach that by providing increased three-dimensionality, in the macroscopic sense, to cleaning sheets, enhanced soil removal is achieved. This three-dimensionality is achieved by the use of materials which provide contractile forces within the body of the sheet. These contractile forces cause the layer or layers of the sheet to fold into relatively random peaks and valleys. These peaks and , valleys provide a diverse set of collection surfaces within the sheet. However, these peaks and valleys, being formed by contractile forces, are generally sinusoidally shaped and therefore provide relatively low amounts of surface at a particular height.

Applicants have found that by increasing the amount of top surface area in a raised region to increase collection of fine dirt particles, surrounded by regions of recessed surface to collect larger, more course particles, cleaning sheets can be developed which provide better overall cleaning.

The use of forming belts for making textured paper is well known. U.S. Patent Number 5,275,700, issued to Trokhan on January 4, 1994, teaches such belts, the process of making such belts, and a process for making a strong, absorbent paper web. The process therein is used to produce strong, absorbent paper products such as paper towels, facial tissue, and toilet tissue. The process therein comprises the use of a forming belt in a vacuum paper forming process. Paper products made by this process tend to have closed structures which are designed primarily for absorbency for wet cleaning and cleaning of wet or moist surfaces. Such closed structures are not optimal for dry cleaning and removal of particulate dust, dirt and soil.

U.S. Patent Number 5,895,623, issued Trokhan et al. on April 20, 1999, discloses the use of patterned forming belts in entangling processes to produce apertured webs of non-woven material. The apertured web is used as a top sheet in absorbing products for control or cleaning of moist or wet soil. EP750063A discloses a non-woven fibrous substrate for use in a cleaning article such as a wetwipe. The hydroentaglement method preferably used in the manufacture of these sheets results in the formation of open apertures at at least 5% of the locations. A pertured webs are not preferred for dust cleaning sheets, since the apertures provide a path out of the sheet for the dirt and dust removed from a surface, resulting in airborne dirt and dust which simply redeposits in the cleaned surface

Accordingly, it is an object of this invention to overcome the problems of the prior art and particularly to provide a non-apertured cleaning sheet more capable of removing and entrapping various types of soil. Specifically, it is an object of this invention to provide a woven or nonwoven structure having no apertures and non-random raised regions surrounded by narrow, continuous recessed regions which is described in detail below.

It is another object to provide improved processes for cleaning and desirable benefits for the consumer and user of the sheets, especially by packaging the sheets, either in roll form, with perforations for separating sheets, or means for separating the sheets into useful lengths, and packaging them in packages that inform the consumer of the improved processes and/or the benefits that can be obtained, especially those benefits that are not intuitively obvious to the consumer. It is another object to provide non-apertured cleaning sheets with additives, especially those that improve adherence of soil to the substrate, and especially for those sheets described hereinafter with three dimensional structure, such combinations having special performance benefits, and such combinations providing improved benefits.

### SUMMARY OF THE INVENTION

The present invention relates macroscopically three-dimensional non-apertured dust cleaning sheets comprising a structure consisting nonwoven materials formed by hydroentanglement, having a working face and a back face, wherein the working face comprises non-random raised regions formed in the hydroentangling process and recessed regions forming a continuous pattern in the X-Y dimension consisting of narrow channels having a width ranging from 1 mm to 8 mm, and the ratio of the area of the raised regions to the area of recessed regions ranges from 80:20 to 50:50. Optionally, the sheets can comprise a scrim material or additives to improve adhesion. Also disclosed are cleaning implements comprising a handle and the described cleaning sheets. Methods of using the sheets, articles of manufacture having instructions to the product benefits of the non-apertured cleaning sheets, and process of making the sheets are also disclosed.

The sheets of this invention and similar sheets, especially those that contain additives at low levels, as described herein, and especially those where the additive is substantially uniformly attached over at least one continuous area, can be used in improved processes for cleaning and to provide desirable benefits for the consumer and user of the sheets, some of those benefits being ones that are not intuitively obvious to a consumer, as detailed hereinafter. It is therefore desirable to package the sheets, either in roll form, with perforations for aiding in separating sheets, or with means for separating the sheets into useful lengths, and/or packaging them in packages that inform the consumer of the improved processes and/or the benefits that can be obtained, especially those benefits that are not intuitively obvious to the consumer. The non-apertured cleaning sheets with additives, including those with desirable low levels of such additives, preferably substantially uniformly attached, at least in one, or more areas, provide, in combination, special performance benefits, and such combinations can provide improved benefits, especially when the sheets have the desirable structures set forth herein.

It is another object to provide improved processes for cleaning and desirable benefits for the consumer and user of the sheets, especially by packaging the sheets, either in roll form, with perforations for separating sheets, or means for separating the sheets into useful lengths, and packaging them in packages that inform the consumer of the improved processes and/or the benefits that can be obtained, especially those benefits that are not intuitively obvious to the consumer. It is another object to provide non-apertured cleaning sheets with additives, especially those that improve adherence of soil to the substrate, and especially for those sheets described hereinafter with three dimensional structure, such combinations having specials performance benefits, and such combinations providing improved benefits.

### SUMMARY OF THE INVENTION

The present invention relates macroscopically three-dimensional non-apertured cleaning sheets comprising a structure consisting of materials selected from the group consisting of woven materials and nonwoven materials, having a working face and a back face, wherein the working face comprises non-random raised regions and recessed regions. Optionally, the sheets can comprise a scrim material or additives to improve adhesion. Also disclosed are cleaning implements comprising a handle and the described cleaning sheets. Methods of using the sheets, articles of manufacture having instructions to the product benefits of the non-apertured cleaning sheets, and process of making the sheets are also disclosed.

The sheets of this invention and similar sheets, especially those that contain additives at low levels, as described herein, and especially those where the additive is substantially uniformly attached over at least one continuous area, can be used in improved processes for cleaning and to provide desirable benefits for the consumer and user of the sheets, some of those benefits being ones that are not intuitively obvious to a consumer, as detailed hereinafter. It is therefore desirable to package the sheets, either in roll form, with perforations for aiding in separating sheets, or with means for separating the sheets into useful lengths, and/or packaging them in packages that inform the consumer of the improved processes and/or the benefits that can be obtained, especially those benefits that are not intuitively obvious to the consumer. The non-apertured cleaning sheets with additives, including those with desirable low levels of such additives, preferably substantially uniformly attached, at least in one, or more areas, provide, in combination, special performance benefits, and such combinations can provide improved benefits, especially when the sheets have the desirable structures set forth herein.

### BRIEF DESCRIPTION OF THE DRAWINGS

Figure 1 is a cross-sectional illustration of the non-apertured cleaning sheet of the present invention taken in the X-Y dimension showing the raised and recessed regions of the sheet.
Figure 2 is a plan view schematic illustration of the non-apertured cleaning sheet of the present invention, showing the raised and recessed regions of the sheet.

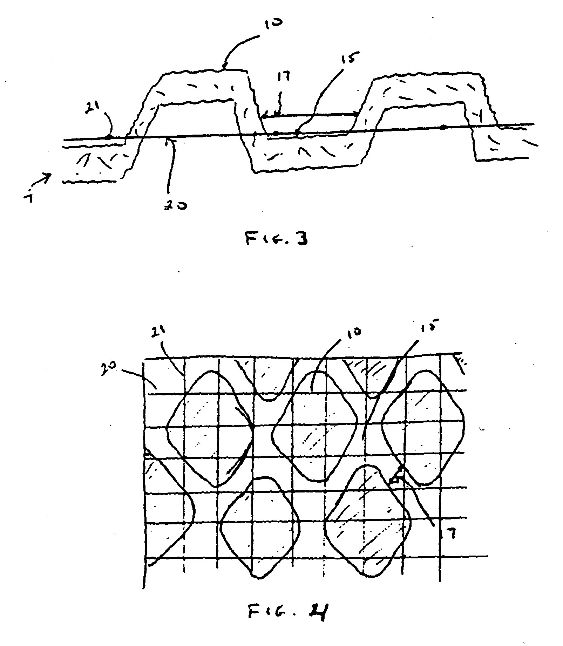

Figure 3 is a cross-sectional illustration of a preferred embodiment of the non-apertured cleaning sheet of the present invention taken in the X-Y dimension showing a second layer wherein the second layer comprises a scrim material having filaments.
Figure 4 is a plan view schematic illustration of a preferred embodiment of the non-apertured cleaning sheet of the present invention showing a second layer comprising a scrim material having filaments running parallel and perpendicular to the sides of the sheet.
Figure 5 is an enlarged plan view illustration of a Rounded Parallelogram Shape pattern for use in forming the raised regions of the non-apertured cleaning sheets of the present invention.
Figure 6 is an enlarged plan view illustration of a Winesin Shape pattern for use in forming the raised regions of the non-apertured cleaning sheets of the present invention.
Figure 7 is an enlarged plan view illustration of a Pie-piece Shape pattern for use in forming the raised regions of the non-apertured cleaning sheets of the present invention.
Figure 8 is an enlarged plan view illustration of a Waved Rectangle Shape pattern for use in forming the raised regions of the non-apertured cleaning sheets of the present invention.

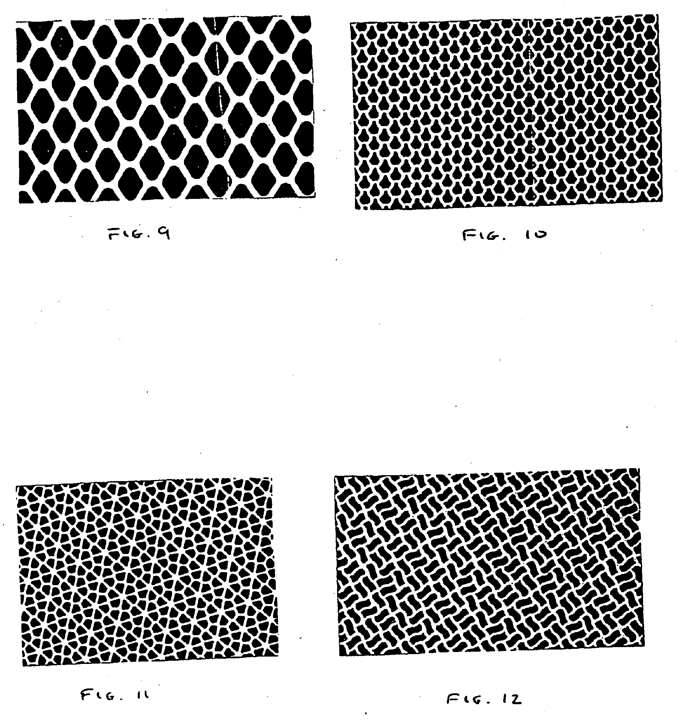

Figure 9 is a plan view illustration of a Rounded Parallelogram Shape pattern for use in forming the raised regions of the non-apertured cleaning sheets of the present invention.
Figure 10 is a plan view illustration of a Wineskin Shape pattern for use in forming the raised regions of the non-apertured cleaning sheets of the present invention.
Figure 11 is a plan view illustration of a Pie-piece Shape pattern for use in forming the raised regions of the non-apertured cleaning sheets of the present invention.
Figure 12 is a plan view illustration of a Waved Rectangle Shape pattern for use in forming the raised regions of the non-apertured cleaning sheets of the present invention.
Figure 13 is a plan-view of a preferred forming belt used in the process to make the preferred non-apertured cleaning sheet of the present invention.
Figures 13A and 13B are cross-sectional views of a forming belt used in the process to make the preferred non-apertured cleaning sheet of the present invention.

### DETAILED DESCRIPTION OF THE INVENTION

### Definitions

As used herein, the term "comprising" means that the various components, ingredients, or steps, tan be conjointly employed in practicing the present invention. Accordingly, the term "comprising" encompasses the more restrictive terms "consisting essentially of" and "consisting of.

As used herein, the term "non-apertured" specifically means that the sheets of the present invention have no voids in the working surface, through the body of the sheet to the back face, larger than the randomly formed spaces between the fibers of the structure formed during the entangling process.

As used herein, the term "pore" refers to a pocket of space into the working surface of the sheet which does not traverse the sheet to the back face.

As used herein, the term "macroscopic three-dimensionality", when used to describe three-dimensional non-apertured cleaning sheets, means the three-dimensional pattern is readily visible to the naked eye when the perpendicular distance between the viewer's eye and the plane of the sheet is 30.48 cm (12 inches). In other words, the three-dimensional structures of the present invention are non-apertured cleaning sheets that are non-planar, in that one or both surfaces of the sheet exist in multiple planes, where the distance between those planes is observable to the naked eye when the structure is observed from 30.48 cm (12 inches). By way of contrast, the term "planar" refers to non-aptrtured cleaning sheets having fine-scale surface aberrations on one or both sides, the surface aberrations not being readily visible to the naked eye when the perpendicular distance between the viewer's eye and the plane of the web is 30.48 cm (12 inches) or greater. In other words, on a macroscale, the observer would not observe that one or both surfaces of the sheet exist in multiple planes so as to be three-dimensional.

As used herein, the term "hydroentanglement" means generally a process for making a material wherein a layer of loose fibrous material (e.g., polyester) is supported on an apertured patterning member and is subjected to water pressure differentials sufficiently great to cause the individual fibers to entangle mechanically to provide a fabric. The apertured patterning member can be formed, e.g., from a woven screen, a perforated metal plate, etc.

As used herein, the term "Z-dimension" refers to the dimension orthogonal to the length and width of the cleaning sheet of the present invention, or a component thereof. The Z-dimension usually corresponds to the thickness of the sheet.

As used herein, the term "X-Y dimension" refers to the plane orthogonal to the thickness of the cleaning sheet, or a component thereof. The X and Y dimensions usually correspond to the length and width, respectively, of the sheet or a sheet component.

As used herein, the term "layer" refers to a member or component of a cleaning sheet whose primary dimension is X-Y, i.e., along its length and width. It should be understood that the term layer is not necessarily limited to single layers or sheets of material. Thus the layer can comprise laminates or combinations of several sheets or webs of the requisite type of materials. Accordingly, the term "layer" includes the therms "layers" and "layered."

As used herein, the "working face" of a cleaning sheet is the face that is contacted with the surface that is to be cleaned (i.e., in the implement context, relatively further away from the implement handle during use). The tern "back face" conversely means the face of a cleaning sheet that is not contacted with the surface that is to be cleaned (i.e., in the implement context, relatively further away from the implement handle during use).

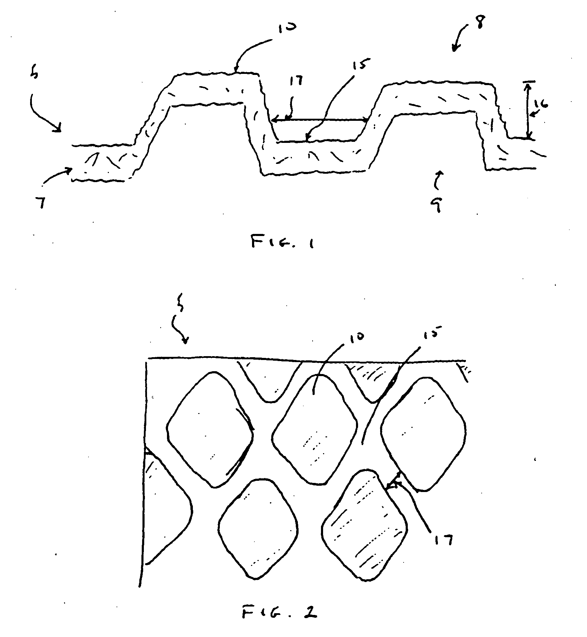

As used herein, the term "raised region" refers to a relatively flat region of the woven or hydroentangled fiber cleaning sheet which is formed closer to the working face. These raised regions are in more direct contact with the surface to be cleaned when used. The term "recessed region" refers to a relatively flat region of the woven or hydroentangled fiber sheet which is formed away from the working face of the sheet. These recessed regions are in less direct contact with the surface cleaned during use. FIG. 1.

As used herein, the term "non-random" refers to the fact that the formation of the raised and recessed regions are formed by a controlled process such that they have specific dimensions optimized to clean a diverse range of dirt particle sizes. This is in contrast to cleaning sheet which form more random peaks and valleys resulting from contractile forces within the body of the sheet.

By "elastic like behavior" it is meant that the element in question can be elongated under tension in a direction to have an elongated dimension measured in that direction which is at least 120 percent of the element's original, relaxed dimension in that direction, and that upon release of the elongating tension the element recovers to within 10 percent of its relaxed dimension.

All percentages, ratios and proportions used herein are by weight unless otherwise specified.

### Cleaning Sheets

The present invention relates to a non-apertured cleaning sheet, 5, useful for removing dust, lint, hair, grass, sand, food crumbs and other matter of various size, shape, consistency, etc., from a variety of surfaces. Preferably, the non-apertured cleaning sheets will demonstrate improved cleaning performance in consumer panel testing.

The macroscopically three dimensional cleaning sheet, 5, of the present invention comprises a structure, 7, of nonwoven material. The nonwoven material can be made using forming operations using melted materials laid down on forms, especially in belts, and/or by forming operations involving mechanical actions/modifications carried out on films. The structures are nonwoven formed by hydroentanglement as is well known in the art, since they provide highly desirable open structures as compared to other processes (e.g. wet laid or paper towels).

Materials particularly suitable for forming the nonwoven non-apertured cleaning sheet of the present invention include, for example, natural fibers, e.g. wood pulp, cotton, wool, and the like, as well as biodegradeable fibers, such as polylactic acid fibers, and synthetic fibers such as polyolefins (e.g., polyethylene and polypropylene), polyesters, polyamides, synthetic cellulosics (e.g., RAYON^{®}, Lyocell), cellulose acetate, bicomponent fibers, and blends thereof. Preferred starting materials for making the hydroentangled fibrous sheets of the present invention are synthetic materials, which can be in the form of carded, spunbonded, meltblown, airlaid, or other structures. Particularly preferred are polyesters, especially carded polyester fibers. The degree of hydrophobicity or hydrophilicity of the fibers is optimized depending upon the desired goal of the sheet, either in terms of type of soil to be removed, the type of additive that is provided, when an additive is present, biodegradability, availability, and combinations of such considerations. In general, the more biodegradable materials are hydrophilic, but the more effective materials tend to be hydrophobic.

Fibers may have denier, which typically range in the art from as low as 0.1 denier to as high as 20 denier. Preferred fibers for use in making the cleaning sheets of the present invention have a denier of greater than or equal to 1.5 denier, preferably greater than or equal to 3 denier, more preferably greater than or equal to 6 denier, and even more preferably greater than or equal to 11 denier. A separate preferred embodiment of the present invention has a structure comprising fibers having 2 or more distinct deniers.

The fibers can be shaped fibers, such as trilobal, hexagonal, ribbed, ribboned, and the like, and combinations thereof Such fibers can enhance the dust capturing capability of the cleaning sheets herein.

The non-apertured cleaning sheets can be formed from a single fibrous layer, but preferably are a composite of at least two separate layers. In this regard, prior to hydroentangling discrete layers of fibers, it may be desired to slightly entangle each of the layers prior to joining the layers by entanglement.

The structure, **7**, of the cleaning sheets, are formed such that the sheet have non-random raised regions, **10**, and recessed regions, **15**. See FIGS. **1** and **2**. The configuration of the raised and recessed regions determine the cleaning characteristics of the sheet. The raised region will more directly contact the surface being cleaned and collect and trap fine to small particles of dust and dirt in the open, fibrous surface. The recessed regions will contact the surface in a less direct manner and will provide pockets for larger particles of dirt to be trapped and removed.

As a result, the two sides of the cleaning sheet will have different cleaning characteristics. Therefore, each sheet will have a working face, **8,** which is the side of the sheet which will contact the surface to be cleaned when used, and a back side, **9,** which will be the side of the sheet held in the hand or on an implement, away from the surface being cleaned.

The height of the raised regions above the recessed region, **16,** is represented by the Average Height Differential (method described in the Analytical Methods Section hereinafter). The Average Height Differential of the cleaning sheets of the present invention must be at least 0.2 mm, preferably at least 0.4 mm, and more preferably at least 0.6 mm.

The non-apertured cleaning sheets, 5, have recessed regions,**15,** which form a continuous recessed pattern in the X-Y dimension on the working face of the sheet. FIG. 2. The continuous pattern consists of narrow channels having a width, **17,** ranging from 1 mm to 8 mm, preferably from 2.5 mm to 2 mm.

The ratio of the area of the raised region, **10,** on the working face, **8,** to the area of the recessed region,**15,** ranges from 80:20 to 50:50, preferably from 80:20 to 60:40.

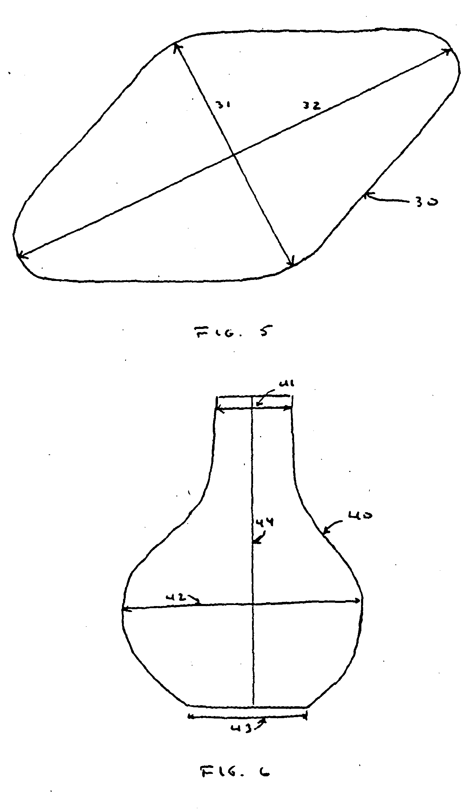

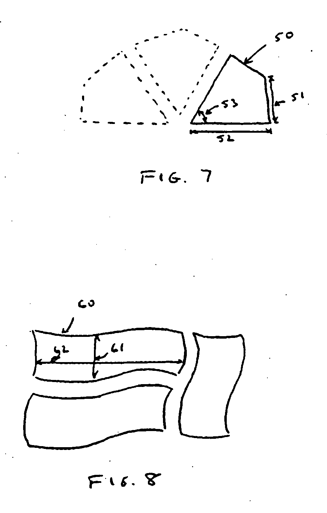

The raised regions, **10,** may be formed in patterns inside the continuous pattern of the recessed region,**15.** Any pattern may be used as long as the working face has raised and recessed regions. Preferred patterns for the raised region include:
Rounded parallelogram shapes, **30,** FIG. 5 - A parallelogram having rounded points having a short diagonal length, **31,** of from 6.5 mm to 7.5 and a long diagonal length, **32,** of from 9.0 mm to 10.0 mm,
Wineskin shapes, **40,** FIG. **6** - A shape resembling a wineskin having a neck width, **41,** of from 0.5 mm to 1.5 mm, a maximum body width, **42,** of from 2.7 mm to 3.7 mm, a base length, **43,** of from 1.0 mm to 2.0 mm, and a body height, **44,** of from 3.2 mm to 4.2 mm.;
Pie piece shapes, **50,** FIG: 7 - A shape resembling a pie piece having a side length, **52,** from 2.0 mm to 3.0 mm, and end piece length, **51,** from 1.0 mm to 2.0 mm, and an endpoint included angle, **53,** of from 55° to 65°; and
Waved rectangle shapes, **60,** FIG. **8** - A shape of a wavey rectangle having a length, **62.** from 4.0 mm to 5.0 mm and a width, **61,** from 1.5 mm to 2.5 mm.

Other preferred patterns include shapes that spell out trade names or resemble logo designs

The preferred structures also provide benefits by trapping larger particles rather than abrading them to smaller sizes.

It will be apparent to one skilled in the art that there will be relatively small regions of peaks and valleys that are not significant enough to be considered as providing significant additional macroscopic three dimensionality. For example, such regions can exist within the raised or recessed regions. Such fluctuations and variations are a normal and expected result of the manufacturing process and are not considered when measuring the Average Height Differential.

Every open surface, whether woven or nonwoven has pores in the surface formed in the making process. For example, in the hydroentangling process that the high pressure fluid flow will randomly align the fibers such that pockets of space are formed in the surface. In traditional cleaning sheets, these pores are such that the total volume of the pores on the surface range from about 475 to about 700 gsm. The pores on the working surface of the cleaning sheet of the present invention have a total pore volume of greater than about 750 gsm, preferably greater than about 900 gsm, and more preferably greater than about 1000 gsm.

Pores provide both additional surface area of exposed fiber material to increase the amount of entrapment of fine dust particles and natural pockets with trap medium sized dirt particles. Therefore the distribution of the size of the pores is critical to the ability of a cleaning sheet to trap a diverse size range of dirt particles. Preferred embodiments of the present invention have a pore size distribution such that greater than about 15%, preferably greater than about 20%, and more preferably greater than about 25%, of the pore volume is contained in pores having a pore size of greater than about 70 microns. Preferred embodiments of the present invention have a pore size distribution such that greater than about 7.5%, preferably greater than about 15%, more preferably greater than about 20%, and even more preferably greater than about 25%, of the pore volume is contained in pores having a pore size of between 70 microns and 100 microns.

### Optional Scrim

In particularly preferred embodiments of the present invention, to enhance the integrity of the final cleaning, it is preferred to include a polymeric net (referred to herein as a "scrim", **20**, material) that is arranged within the fibrous material structure, 7, e.g., though lamination via heat or chemical means such as adhesives, through hydroentanglement, etc. Scrim materials useful herein are described in detail in U.S. Patent No. 4,636,419. The scrims can be formed directly at the extrusion die or can be derived from extruded films by fibrillation or by embossing, followed by stretching and splitting. The scrim can be derived from a polyolefin such as polyethylene or polypropylene, copolymers thereof, poly(butylene terephthalate), polyethylene terephthalate, Nylon 6, Nylon 66, and the like. Scrim materials are available from various commercial sources. A preferred scrim material useful in the present invention is a polypropylene scrim, available from Conwed Plastics (Minneapolis, MN).

The scrim material, **20,** is preferably joined to the fibrous structures, **7,** of the cleaning sheet, **5,** through lamination via heat or chemical means such as adhesives. A particularly suitable scrim material is a heat activated reinforcing netting available from Conwed plastics of Minneapolis, MN as THERMANET brand reinforcing netting, having a polypropylene/EVA resin, 2 sided adhesive, and a filament count of 3 filaments per inch by 2 filaments per inch prior to contraction such as by heating. After heating, the scrim can have between 3.5 to 4.5 filaments per 2.54 cm (inch) or between 2.5 to 3.5 filaments per 2.54 cm (inch).

By "2 sided adhesive" it is meant that the EVA adhesive (Ethyl-Vinyl Acetate adhesive) is present on both sides of the filaments. The activation temperature of the EVA is generally about 85°C (about 185°F). During lamination of the scrim to the polyester fibers of the sheet structure, the EVA adhesive is activated to provide bonding between the filaments of the scrim and the fibers of the structure. Without being limited by theory, it is believed that pressing at a relatively low pressure (e.g. less than 344.7 kPa (50 psi) and more preferably less than 172.4 kPa (25 psi) for a relatively short time (e.g. less than 30 seconds), the filaments of the scrim are not continuously bonded to the nonwovens of the structure. This discontinuous bonding, along with the shrinkage of the polypropylene filaments upon heating, provides enhanced texture of the outward faces of the sheet.

### Optional Additives

The use of a low level of additive, uniformly attached on at least one, preferably continuous area of the sheet in an effective amount to improve the adherence of soil, especially particulates, and especially those particulates that provoke an allergic reaction, provides a surprising level of control over soil adherence. At least in those areas where the additive is present on the sheet, the low level is important for such use, since, unlike traditional dusting operations where oils are applied as liquids, or as sprays, there is much less danger of creating a visible stain, especially on such non-traditional surfaces, when the sheet is used.

The cleaning performance of any of the non-apertured cleaning sheets of the present invention can be further enhanced by treating the fibers of the sheet, especially surface treating, with any of a variety of additives, including surfactants or lubricants, that enhance adherence of soils to the sheet. When utilized, such additives are added to the non-apertured cleaning sheet at a level sufficient to enhance the ability of the sheet to adhere soils. Such additives are preferably applied to the cleaning sheet at an add-on level of at least 0.01%, more preferably at least 0.1%, more preferably at least 0.5%, more preferably at least 1%, still more preferably at least 3%, still more preferably at least 4%, by weight. Typically, the add-on level is from 0.1 to 25%, more preferably from 0.5 to 20%, more preferably from 1 to 15%, still more preferably from 3 to 10%, still more preferably from 4 to 8%, and most preferably from 4 to 6%, by weight. A preferred additive is a wax or a mixture of an oil (e.g., mineral oil, petroleum jelly, etc.) and a wax. Suitable waxes include various types of hydrocarbons, as well as esters of certain fatty acids (e.g., saturated triglycerides) and fatty alcohols. They can be derived from natural sources (i.e., animal, vegetable or mineral) or can be synthesized. Mixtures of these various waxes can also be used. Some representative animal and vegetable waxes that can be used in the present invention include beeswax, carnauba, spermaceti, lanolin, shellac wax, candelilla, and the like. Representative waxes from mineral sources that can be used in the present invention include petroleum-based waxes such as paraffin, petrolatum and microcrystalline wax, and fossil or earth waxes such as white ceresine wax, yellow ceresine wax, white ozokerite wax, and the like. Representative synthetic waxes that can be used in the present invention include ethylenic polymers such as polyethylene wax, chlorinated naphthalenes such as "Halowax," hydrocarbon type waxes made by Fischer-Tropsch synthesis, and the like.

When a mixture of mineral oil and wax is utilized, the components will preferably be mixed in a ratio of oil to wax of from 1:99 to 7:3, more preferably from 1:99 to 1:1, still more preferably from 1:99 to 3:7, by weight. In a particularly preferred embodiment, the ratio of oil to wax is 1:1, by weight, and the additive is applied at an add-on level of 5%, by weight. A preferred mixture is a 1:1 mixture of mineral oil and paraffin wax.

Particularly enhanced - cleaning performance is achieved when macroscopic three-dimensionality and additive are provided in a single cleaning sheet. As discussed hereinbefore, these low levels are especially desirable when the additives are applied at an effective level and preferably in a substantially uniform way to at least one discrete continuous area of the sheet. Use of the preferred lower levels, especially of additives that improve adherence of soil to the sheet, provides surprisingly good cleaning, dust suppression in the air, preferred consumer impressions, especially tactile impressions, and, in addition, the additive can provide a means for incorporating and attaching perfumes, pest control ingredients, antimicrobials, including fungicides, and a host of other beneficial ingredients, especially those that are soluble, or dispersible, in the additive. These benefits are by way of example only. Low levels of additives are especially desirable where the additive can have adverse effects on the substrate, the packaging, and/or the surfaces that are treated.

The application means for these additives preferably applies at least a substantial amount of the additive at points on the sheet that are "inside" the sheet structure. It is an especial advantage of the three dimensional structures that the amount of additive that is in contact with surface to be treated, and/or the package, is limited, so that materials that would otherwise cause damage, or interfere with the function of the other surface, can only cause limited, or no, adverse effects. The presence of the additive inside the structure is very beneficial in that soil that adheres inside the structure is much less likely to be removed by subsequent wiping action.

### Cleaning Implements

ln another aspect, the present invention relates to a cleaning implement comprising the non-apertured cleaning sheets discussed above. In this regard, the cleaning implement comprises a handle; and a removable cleaning sheet comprising a structure consisting of materials selected from the group consisting of woven materials and nonwoven materials, having a working face and a back face, wherein the working face comprises non-random raised regions and recessed regions.

The handle of the cleaning implement comprises any elongated, durable material that will provide ergonomically practical cleaning. The length of the handle will be dictated by the end-use of the implement.

The handle will preferably comprise at one end a support head to which the cleaning sheet can be releasably attached. To facilitate ease of use, the support head can be pivotably attached to the handle using known joint assemblies. Any suitable means for attaching the cleaning sheet to the support head can be utilized, so long as the cleaning sheet remains affixed during the cleaning process. Examples of suitable fastening means include clamps, hooks & loops (e.g., VELCRO^{®}), and the like. In a preferred embodiment, the support head will comprise means for gripping the sheet on it's upper surface to keep the sheet mechanically attached to the head during the rigors of cleaning. However, the gripping means will readily release the sheet for convenient removal and disposable.

The non-apertured cleaning sheets useful in the cleaning implement of the present invention are as described above.

### Process for Making

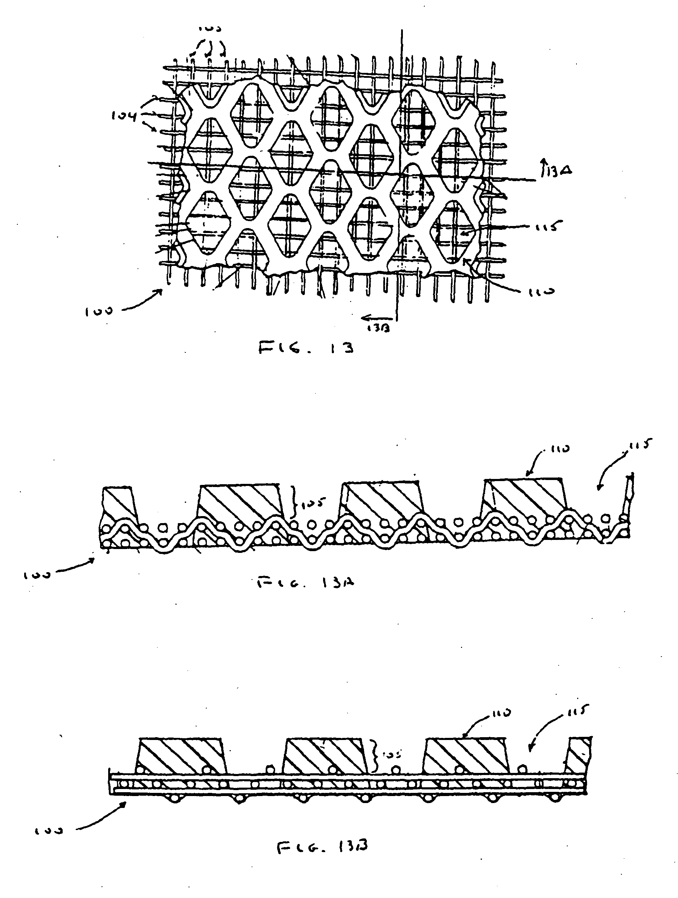

The present invention also includes an especially preferred method for making a multiple layer non-apertured cleaning sheet comprising the step of hydroentangling the fibers of the structure on a forming belt, **100,** having the desired pattern of raised and recessed regions. These belts are described in U.S. Patent 5,275,700, and represented in FIGS. **13, 13A,** and **13B****.** The belt may comprise machine-direction warp yarns, **103,** cross-machine-direction weft yarns, **104,** and a pattern framework, **110.** The pattern framework may be formed on the warp and weft yarns by any method known in the art. See U.S. Patent 5,275,700. The framework has solid areas, **110,** and void areas, **115,** which correspond to the recessed regions and the raised regions, respectively, of the non-apertured cleaning sheet formed on the belt. The framework of the forming belt has a thickness, **105,** and has solid, **110,** and void areas, **115,** such that the desired pattern of raised regions will be formed on the non-apertured cleaning sheet in the hydroentangling process. The framework must have a thickness ranging from 0.07 mm to 2.0 mm, preferably from 0.2 mm to 1.5 mm, and more preferably from 0.4 mm to 0.9 mm. It should be noted that the X-Y dimensions of the raised regions are slightly greater than the width of the form void areas in the form belt. Without being limited by theory, it is believed that during the hydroentangling process the fibers which are pushed into the voids are under compressive force. After hydroentagling, when the sheet is removed from the formbelt, the resulting raised regions will naturally expand, thereby increasing the raised area.

The overall preferred process may be as follows. A layer of nonwoven fiber material is provided and is positioned on a forming belt having the desired pattern. The layer of fibers are then entangled in a hydroentanging unit thereby forming the cleaning sheet. The entangle sheet is then dried.

A more preferred process would be as follows. A first nonwoven layer, a second layer comprising a net like arrangement of filaments (scrim), and a third nonwoven layer are provided. The first layer is positioned adjacent an upper surface of the second layer, in face to face relationship with the second layer. The third layer is positioned adjacent a lower surface of the second layer, in face to face relationship with the second layer. The three layers are then placed on a forming belt having the desired pattern. The first layer and the third layer are then entangled in a hydroentanging unit such that portions of the filaments extending between filament intersections remain unbonded to the first layer, and such that portions of the filaments extending between filament intersections remain unbonded to the third layer. The second layer may then be contracted relative to the first layer and the third layer. The steps of bonding and contracting can occur simultaneously, or in sequence. The entangled sheet is then dried.

The step of intermittently bonding the second layer to the first layer and the third layer can comprise the step of heated pressing of the first layer, the second layer, and third layer at a relatively low pressure for a relatively short time period to avoid relatively continuous bonding of the second layer to the first and third layers.

### Methods of Use

The non-apertured cleaning sheet and, separately, the cleaning implement of the present invention are designed to be compatible with all hard surface substrates, including wood, vinyl, linoleum, no wax floors, ceramic, FORMICA^{®}, porcelain, and the like. They have also been found to be effective on surfaces like walls, ceilings, upholstery, drapes, rugs, clothing, etc., where dusting sheets have not normally been used.

As a result of the ability of the non-apertured cleaning sheets to reduce, or eliminate, by various means, including contacting and holding, dust, lint and other airborne matter from surfaces, as well as from the air, the sheets will provide greater reduction in the levels of such materials on surfaces and in the atmosphere, relative to other products and practices for similar cleaning purposes. This ability is especially apparent in sheets containing additives as described herein. Therefore it is important to provide this information on the package, or in association with the package, so as to encourage the use of the sheets, especially on the non-traditionally dusted surfaces like walls, ceilings, upholstery, drapes, rugs, clothing, etc.

The non-apertured cleaning sheets herein are also useful for removing residue from glass surfaces, such as fingerprints and other oily residues.

Consumers with allergies especially benefit from the use of the sheets herein, especially the preferred structures, since allergens are typically in dust form and it is especially desirable to reduce the level of small particles that are respirable. For this benefit, it is important to use the sheets on a regular basis, and not just when the soil becomes visually apparent, as in prior art procedures.

The non-apertured cleaning wipe may also be used as a substrate in other cleaning products such as facial and bath tissue, paper towels, or glass cleaning wipes. Examples of glass cleaning wipe application are shown in U.S. Patent Application, Serial No. 60/156,286 filed September 27, 1999.

The invention also comprises articles of manufacture comprising the non-apertured cleaning sheets of the present invention, the non-apertured cleaning sheets being contained in a package in association with instructions for achieving one or more of the following benefits:
- captures particulate soils on contact while minimizing dispersal of said soils in the air as compared to normal dusting techniques;
- removes more particulate soil than normal dusting techniques;
- removes invisible particulate matter;
- does not require the application of an additional product;
- uses electrostatic charge to pick up very fine particulate soil;
- has a macroscopically three-dimensional structure to pick up relatively large particles;
- provides surface safety;
- lowers the level of particulate material in the air;
- reduces the level of particulate soil on a surface;
- captures particulate soil on contact while minimizing dispersal of said soil in the air as compared to normal dusting techniques to minimize inhalation of said particulate soil and/or redeposition of said particulate soil;
- removes more particulate soil than normal dusting techniques so that your surfaces are cleaner;
- does not require the application of an additional product so that the process is simplified.
- requires less effort as compared to normal dusting techniques since the particulate soil is more completely removed the first time;
- the process collects more particulate soil as compared to normal dusting techniques so that it can be removed from the house or other area;
- results in a reduction of airborne allergens; or
- results in a reduction of airborne pathogens.

These are packages containing non-apertured cleaning sheets, the packages being in association with information that will inform the consumer, by words and/or by pictures, that use of the sheets will provide the cleaning benefits. In a highly desirable variation, the package bears the information that informs the consumer that the use of the cleaning sheet provides reduced levels of dust and other airborne matter in the atmosphere. It is very important that the consumer be advised of the potential to use the sheets on non-traditional surfaces, including fabrics, pets, etc., to ensure that the full benefits of the sheets is realized. Accordingly, the use of packages in association with information that will inform the consumer, by words and/or by pictures, that use of the compositions will provide benefits such as improved cleaning, reduction of particulate soil in the air, etc. as discussed herein, is important. The information can include, e.g., advertising in all of the usual media, as well as statements and icons on the package, or the sheet itself, to inform the consumer.

Given that the non-apertured cleaning sheets of the present invention are designed such that one side, the working surface provides optimal cleaning of dust and dirt, it is desirable that consumers are instructed to use the preferred side. This is easily accomplished by packaging the cleaning sheet folded such that the working surface is on the outside as folded. The consumer is instructed, either by separate instructions or instruction printed on the package, to lay the sheet on a surface, then unfold the sheet, then place the hand or the implement handle on the sheet (the back face of the sheet), and proceed to clean. Preferably, when using an implement handle, the sheet is folded such that upon unfolding by the consumer, the folds form a natural bed for the handle. The consumer easily can determine how to mount the sheet on the handle while assuring that the consumer will use the proper face of the sheet.

### Test Methods

The Average Height Differential is determined using a Zygo New View 200 scanning white light interferometer, Zygo Corporation of Middelfield Connecticut. The inferometer is operated in standard procedures using the following operating parameters in the analyses: 2.5X Michelson objective with a zoom factor of 0.5X, the Zygo Focus white light filter element, normal resolution data acquisition (320x240 data points), Minimum Modulation % set equal to 1, and Minimum Area Size set equal to 7. The scan length was set from 800um to 2500um depending on the topography of the sample. The Frequency Domain Analysis was set to do calculations in Normal mode. To accommodate a larger field of view, a matrix of 5x4 analyses were automatically stitched together using the Zygo MetroPro v7.L software with a 10% overlap (final overall analysis area was 26.38mm x 15.92mm.) The measurement is repeated at least 10 times, at random locations on the sheet, and the Average Height Differential is the average of these measurements.

### Representative Examples

The following are illustrative examples of non-apertured cleaning sheets of the present invention.

### Examples 1-4

This example illustrates the use of two carded webs of polyester to make a non-apertured cleaning sheet of the present invention. Two carded polyester fiber webs, having a denier of 1.5 denier, are prepared. The combination of the two carded webs are placed on top of a forming belt, having a solid pattern having a thickness of 0.43 mm, in the rounded parallelogram shape FIG. 5 having a short diameter length of 4.66 mm a long diagonal length of 7.88 mm The sheets are then hydroentangled and dried. The water entangling process causes the fibers to become intertangled while causing the fibers to move apart and provide two distinct basis weight regions. The sheet is then dried. As a preferred optional step, the nonwoven sheet is surface coated (by, e.g., printing, spraying, etc.) with 5%, by weight, of a 1:1 mixture of mineral oil and paraffin wax.

Example 2 is made using the process of Example 1, however using a forming belt, having a solid pattern having a thickness of 0.43 mm, in the Wineskin shape of FIG. 6 having a neck width of 1.03 mm, a maximum body width of 3.3 mm, a base length of 1.47 mm, and a body height of 3.7 mm.

Example 3 is made using the process of Example 1, however using a forming belt, having a solid pattern having a thickness of 0.83 mm, in the Pie-piece shape of FIG. 7 having a side length of 2.5 mm, a base length of 1.3 mm, and an end-point included angle of 60°.

Example 4 is made using the process of Example 1, however using a forming belt, having a solid pattern having a thickness of 1.4 mm, in the Waved rectangle shape of FIG. 8 having a length of 4.0 mm and a width of 2.0 mm.

### Examples 5-8

Example 5 illustrates the combination of carded webs and a scrim (i.e., a net of polypropylene filament) to make a non-apertured cleaning sheet of the present invention. Two carded polyester fiber webs, having a denier of 1.5 denier, and a scrim in between are prepared. The combination of the two carded webs and the scrim are then placed on top of a forming belt, having a solid pattern having a thickness of 0.43 mm, in the rounded parallelogram shape FIG. 5 having a short diameter length of 4.66 mm a long diagonal length of 7.88 mm The sheets are then hydroentangled and dried. The water entangling process causes the fibers to become intertangled and to also become intertangled with the scrim, while causing the fibers to move apart and provide two distinct basis weight regions. The sheet is then dried. As a preferred optional step, the nonwoven sheet is surface coated (by, e.g., printing, spraying, etc.) with 5%, by weight, of a 1:1 mixture of mineral oil and paraffin wax. As a separate preferred optional step, the fiberous sheets are shunk during the drying process up to 20% in the cross-machine direction.

Example 6 is made using the process of Example 1, however using a forming belt, having a solid pattern having a thickness of 0.43 mm, in the Wineskin shape of FIG. 6 having a neck width of 1.03 mm, a maximum body width of 3.3 mm, a base length of 1.47 mm, and a body height of 3.7 mm.

Example 7 is made using the process of Example 1, however using a forming belt, having a solid pattern having a thickness of 0.83 mm, in the Pie-piece shape of FIG. 7 having a side length of 2.5 mm, a base length of 1.3 mm, and an end-point included angle of 60°.

Example 8 is made using the process of Example 1, however using a forming belt, having a solid pattern having a thickness of 1.4 mm, in the Waved rectangle shape of FIG. 8 having a length of 4.0 mm and a width of 2.0 mm.

### Examples 9-16

Examples 9 to 16 are made similarly to Examples 1-8, with the exception that the carded polyester consists of fibers having both a denier of 1.5 denier and a denier of 6 denier.

## Claims

1. A macroscopically three-dimensional non-apertured dust cleaning sheet **(5)** comprising a structure **(7)** consisting of nonwoven materials formed by hydroentanglement, having a working face **(8)** and a back face **(9)**, wherein the working face **(8)** comprises non-random raised regions **(10)** formed in the hydroentangling process and recessed regions **(15)** forming a continuous pattern in the X-Y dimension consisting of narrow channels having a width ranging from 1 mm to 8 mm, and the ratio of the area of the raised regions **(10)** to the area of the recessed regions ranges from 80:20 to 50:50.

2. The non-apertured cleaning sheet **(5)** of Claim 1 wherein the structure **(7)** consists of material formed by hydroentanglement of fibers selected from the group consisting of natural fibers, polyolefins, polyesters, polyamides, synthetic cellulosics, biodegradable fibers, bicomponent fibers, and blends thereof.

3. The cleaning sheet **(5)** of Claim 2 wherein the structure **(7)** consists of hydroentangled carded polyester fiber.

4. The non-apertured cleaning sheet **(5)** of Claim 1 wherein the Average Height Differential of the working faces is at least 0.5 mm, preferably at least 1 mm, and more preferably at least 1.5 mm.

5. The non-apertured cleaning sheet **(5)** of any one of the preceding Claims wherein the discrete raised surface is in a shape selected from the group consisting of: (a) a rounded parallelogram (30) having a height of from 6.0 mm to 7.0 mm, a short diagonal **(31)** of from 6.5 mm to 7.5 mm, and a long diagonal **(32)** of from 9.0 mm to 10.0 mm; (b) a wineskin **(40)** having a width **(41)** of from 2.7 mm to 3.7 mm, a base **(43)** of from 1.0 mm to 2.0 mm, a height **(44)** of from 3.2 mm to 4.2 mm, and a neck **(41)** from 0.5 mm to 1.5 mm; (c) a pie piece **(50)** having side lengths **(52)** of from 2.0 mm to 3.0 mm and a base lengths **(51)** of from 1.0 mm to 2.0 mm, and having an included angle **(53)** between the two sides of from 55° to 65°; (d) a waved rectangle **(60)** having a length **(62)** of 4.0 mm to 5.0 mm and a width **(61)** of from 1.5 mm to 2.5 mm.

6. The non-apertured cleaning sheet **(5)** of any one of the preceding Claims which further comprises a scrim (20).

7. The non-apertured cleaning sheet **(5)** of Claim 6 wherein the scrim **(20)** is derived from a polyolefin, preferably selected from the group consisting of polypropylene, polyethylene, ethyl vinyl acetate, and mixtures thereof.

8. The non-apertured cleaning sheet **(5)** of any one of the preceding Claims having an additive applied at a low effective level, preferably at least 0.01%, more preferably at least 1%, still more preferably from 1% to 15%, and even more preferably from 3 to 10%, by weight of the sheet.

9. The non-apertured cleaning sheet **(5)** of Claim 10 wherein the additive is a mixture of mineral oil and a wax.

10. The non-apertured cleaning sheet **(5)** of any one of the preceding Claims wherein said disposable non-apertured cleaning sheet **(5)** can be attached to a light weight implement to provide easy access to places that are difficult to reach.

11. A cleaning implement **characterized by** comprising:
a. a handle; and
b. a removable cleaning sheet **(5),** wherein the cleaning sheet **(5)** is the sheet of any one of the preceding Claims.

12. A method for cleaning a surface **characterized by** comprising contacting the surface with the working face of the cleaning sheet **(5)** of any one of Claims 1-10.

13. A process for making a non-apertured cleaning sheet **(5)** according to any of Claims 1-10 **characterized by** having a non-random macroscopic three dimensional character comprising the step of hydroentangling fibers on a patterned forming belt.

14. An article of manufacture **characterized by** comprising the non-apertured cleaning sheets **(5)** of Claim 1, the cleaning sheets **(5)** being contained in a package in association with instructions for achieving a benefit selected from the group consisting of:
- captures particulate soils on contact while minimizing dispersal of said soils in the air as compared to normal dusting techniques;
- removes more particulate soil than normal dusting techniques;
- removes invisible particulate matter;
- does not require the application of an additional product;
- uses electrostatic charge to pick up very fine particulate soil;
- has a macroscopically three-dimensional structure to pick up relatively large particles;
- provides surface safety
- lowers the level of particulate material in the air;
- reduces the level of particulate soil on a surface;
- captures particulate soil on contact while minimizing dispersal of said soil in the air as compared to normal dusting techniques to minimize inhalation of said particulate soil and/or redeposition of said particulate soil;
- removes more particulate soil than normal dusting techniques so that your surfaces are cleaner;
- does not require the application of an additional product so that the process is simplified.
- requires less effort as compared to normal dusting techniques since the particulate soil is more completely removed the first time;
- the process collects more particulate soil as compared to normal dusting techniques so that it can be removed from the house or other area;
- results in a reduction of airborne allergens;
- results in a reduction of airborne pathogens; and
- combinations thereof;
by using the working face of the sheets on a surface having particulate material on it.

15. An article of manufacture **characterized by** comprising the non-apertured cleaning sheets **(5)** of any of Claims 1-10 having been folded such that the working face **(8)** of the sheet **(5)** is on the outside as folded, the cleaning sheets **(5)** being contained in a package in association with instructions to lay the sheet **(5)** on a surface, then unfold the sheet **(5)**, then place the hand or the implement handle on the sheet (5), and proceed to clean.

16. A non-apertured cleaning sheet **(5)** according to Claims 1-10 **characterized by** comprising a structure made from fibers having a denier of greater than about 2.0 denier.

## Patentansprüche

1. Makroskopisch dreidimensionales nicht mit Öffnungen versehenes Staubreinigungstuch (5), umfassend eine Struktur (7), bestehend aus Vliesmaterialien, die durch Waserstrahtverfestigung gebildet sind, mit einer Arbeitsseite (8) und einer Rückseite (9), wobei die Arbeitsseite (8) nichtzufällige erhöhte Bereiche (10) aufweist, die in dem Wasserstrahlverfestigungsprozess gebildet werden, und vertiefte Bereiche (15), die ein kontinuierliches Muster in der X-Y-Abmessung bilden, bestehend aus schmalen Kanälen mit einer Breite im Bereich von 1 mm bis 8 mm, umfasst, und das Verhältnis von der Fläche der erhöhten Bereiche (10) zu der Fläche der vertieften Bereiche im Bereich von 80:20 bis 50:50 liegt.

2. Nicht mit Öffnungen versehenes Reinigungstuch (5) nach Anspruch 1, wobei die Struktur (7) aus Material besteht, das durch Wasserstrahlverfestigen von Fasern, ausgewählt aus der Gruppe, bestehend aus natürlichen Fasern, Polyolefinen, Polyestern, Polyamiden, synthetischen Cellulosen, biologisch abbaubaren Fasern, Bikomponentenfasern und Mischungen davon gebildet wird.

3. Reinigungstuch (5) nach Anspruch 2, wobei die Struktur (7) aus wasserstrahlverfestigter kardierter Polyesterfaser besteht.

4. Nicht mit Öffnungen versehenes Reinigungstuch (5) nach Anspruch 1, wobei das durchschnittliche Höhendifferenzial der Arbeitsseiten mindestens 0,5 mm, vorzugsweise mindestens 1 mm und mehr bevorzugt mindestens 1,5 mm beträgt.

5. Nicht mit Öffnungen versehenes Reinigungstuch (5) nach einem der vorstehenden Ansprüche, wobei die gesonderte erhöhte Oberfläche eine Form hat, die ausgewählt ist aus der Gruppe, bestehend aus: (a) einem abgerundeten Parallelogramm (30) mit einer Höhe von 6,0 mm bis 7,0 mm, einer kurzen Diagonale (31) von 6,5 mm bis 7,5 mm und einer langen Diagonale (32) von 9,0 mm bis 10,0 mm; (b) einem Weinschlauch (40) mit einer Breite (41) von 2,7 mm bis 3,7 min, einer Basis (43) von 1,0 mm bis 2,0 mm, einer Höhe (44) von 3,2 mm bis 4,2 mm und einem Hals (41) von 0,5 mm bis 1,5 mm; (c) einem Kreisausschnitt (50) mit Seitenlängen (52) von 2,0 mm bis 3,0 mm und einer Basislänge (51) von 1,0 mm bis 2,0 mm und mit einem Spitzenwinkel (53) zwischen den zwei Seiten von 55° bis 65°; (d) einem gewellten Rechteck (60) mit einer Läge (62) von 4,0 mm bis 5,0 mm und einer Breite (61) von 1,5 mm bis 2,5 mm.

6. Nicht mit Öffnungen versehenes Reinigungstuch (5) nach einem der vorstehenden Ansprüche, das ferner ein Gelege (20) umfasst.

7. Nicht mit Öffnungen versehenes Reinigungstuch (5) nach Anspruch 6, wobei das Gelege (20) von einem Polyolefin, vorzugsweise ausgewählt aus der Gruppe, bestehend aus Polypropylen, Polyethylen, Ethylvinylacetat und Mischungen davon, abgeleitet ist.

8. Nicht mit Öffnungen versehenes Reinigungstuch (5) nach einem der vorstehenden Ansprüche, auf dem ein Zusatzstoff in einer geringen Menge aufgetragen ist, vorzugsweise mindestens 0,01 Gew.-%, mehr bevorzugt mindestens 1 Gew.-%, noch mehr bevorzugt von 1 Gew.-% bis 15 Gew.-% und noch mehr bevorzugt von 3 bis 10 Gew.-% des Tuches aufgetragen ist.

9. Nicht mit Öffnungen versehenes Reinigungstuch (5) nach Anspruch 10, wobei der Zusatzstoff eine Mischung aus Mineralöl und einem Wachs ist.

10. Nicht mit Öffnungen versehenes Reinigungstuch (5) nach einem der vorstehenden Ansprüche, wobei das nicht mit Öffnungen versehene Einwegreinigungstuch (5) an eine leichte Vorrichtung angebracht werden kann, um Zugang zu Orten bereitzustellen, die schwer zu erreichen sind.

11. Reinigungsvorrichtung, die **dadurch gekennzeichnet ist, dass** sie Folgendes umfasst:
a. einen Griff und
b. ein entfernbares Reinigungstuch (5), wobei das Reinigungstuch (5) das Tuch nach einem der vorstehenden Ansprüche ist.

12. Verfahren zum Reinigen einer Oberfläche, **dadurch gekennzeichnet, dass** es das Inkontaktbringen der Oberfläche mit der Arbeitsseite des Reinigungstuchs (5) nach einem der Ansprüche 1 - 10 umfasst.

13. Verfahren zum Herstellen eines nicht mit Öffnungen versehenen Reinigungstuchs (5) nach einem der Ansprüche 1-10, **dadurch gekennzeichnet, dass** es einen nichtzufälligen makroskopischen dreidimensionalen Charakter hat, umfassend den Schritt der Wasserstrahlverfestigung von Fasern auf einem gemusterten Formband.

14. Herstellungsartikel, **dadurch gekennzeichnet, dass** er die nicht mit Öffnungen verschenen Reinigungstücher (5) nach Anspruch 1 umfasst, wobei die Reinigungstücher (5) in einer Verpackung in Verbindung mit Anweisungen zum Erreichen eines Vorteils enthalten sind, wobei der Vorteil ausgewählt ist aus der Gruppe, bestehend aus:
- Einfangen teilchenförmiger Verschmutzungen bei Kontakt unter Minimieren der Verteilung der Verschmutzungen in der Luft im Vergleich zu normalen Staubwischverfahren;
- Entfernen von mehr teilchenförmigem Schmutz als bei normalen Staubwischverfahren;
- Entfernen unsichtbaren teilchenförmigen Materials;
- keine Notwendigkeit des Auftragens eines zusätzlichen Produkts;
- Verwendung elektrostatischer Ladung zur Aufnahme sehr feinen teilchenförmigen Schmutzes;
- Vorhandensein einer makroskopisch dreidimensionalen Struktur zur Aufnahme relativ großer Teilchen;
- Bereitstellen von Oberflächenschutz;
- Senken des Gehalts von teilchenförmigem Material in der Luft;
- Reduzieren des Gehalts von teilchenförmigem Schmutz auf einer Oberfläche;
- Einfangen teilchenförmigen Schmutzes bei Kontakt unter Minimieren der Verteilung des Schmutzes in der Luft im Vergleich zu normalen Staubwischverfahren, um die Inhalation des teilchenförmigen Schmutzes und/oder die Wiederablagerung des teilchenförmigen Schmutzes zu minimieren;
- Entfernen von mehr teilchenförmigem Schmutz als bei normalen Staubwischverfahren, so dass die Oberflächen sauberer sind;
- keine Notwendigkeit des Auftragens eines zusätzlichen Produkts, so dass das Verfahren vereinfacht wird;
- Notwendigkeit von weniger Anstrengung im Vergleich zu normalen Staubwischverfahren, da der teilchenförmige Schmutz beim ersten Mal umfassender entfernt wird;
- Einsammeln von mehr teilchenförmigem Schmutz in dem Verfahren im Vergleich zu normalen Staubwischverfahren, so dass dieser aus dem Haus oder von einer anderen Fläche entfernt werden kann;
- Erzielen einer Reduzierung in der Luft befindlicher Allergene;
- Erzielen einer Reduzierung in der Luft befindlicher Krankheitserreger; und
- Kombinationen davon;
durch Verwenden der Arbeitsseite der Tücher auf einer Oberfläche mit teilchenförmigem Material darauf.

15. Herstellungsartikel, **dadurch gekennzeichnet, dass** er die nicht mit Öffnungen versehenen Reinigungstücher (5) nach einem der Ansprüche 1-10 umfasst, die so gefaltet sind, dass die Arbeitsseite (8) des Tuches (5), wenn es gefaltet ist, außen ist, wobei die Reinigungstücher (5) in einer Verpackung in Verbindung mit Anweisungen zum Legen des Tuches (5) auf eine Oberfläche, zum anschließenden Entfalten des Tuches (5), dann zum Platzieren der Hand oder des Griffes der Vorrichtung auf dem Tuch (5) und zum anschließenden Reinigen enthalten sind.

16. Nicht mit Öffnungen versehenes Reinigungstuch (5) nach Ansprüchen 1-10, **dadurch gekennzeichnet, dass** es eine Struktur umfasst, die aus Fasern mit einem Denier-Wert von mehr als ungefähr 2,0 Denier hergestellt ist.

## Revendications

1. Feuille de nettoyage pour la poussière macroscopiquement tridimensionnelle non-ouverte (5) comprenant une structure (7) constituée de matériaux non tissés formés par enchevêtrement par voie hydraulique, ayant une face de travail (8) et une face de dos (9) dans laquelle la face de travail (8) comprend des régions relevées non-aléatoircs (10) formées dans le procédé d'enchevêtrement par voie hydraulique et des régions renfoncées (15) formant un motif continu dans la dimension X-Y constitué de canaux étroits ayant une largeur allant de 1 mm à 8 mm, et le rapport de la superficie des régions relevées (10) sur la superficie des régions renfoncées va de 80:20 à 50:50.

2. Feuille de nettoyage non ouverte (5) selon la revendication 1 , dans laquelle la structure (7) est constituée d'un matériau formé par enchevêtrement par voie hydraulique de fibres choisies dans le groupe constitué de fibres naturelles, polyoléfines, polyesters, polyamides, cellulosiques synthétiques, fibres biodégradables, fibres à bicomposants, et leurs mélanges.

3. Feuille de nettoyage (5) selon la revendication 2, dans laquelle la structure (7) est constituée de fibre de polyester cardées enchevêtrées par voie hydraulique.

4. Feuille de nettoyage non ouverte (5) selon la revendication 1, dans laquelle la Différence de Hauteur Moyenne des faces de travail est au moins 0,5 mm, de préférence au moins 1 mm, et plus préférablement au moins 1,5 mm.

5. Feuille de nettoyage non ouverte (5) selon l'une quelconque des revendications précédentes, dans laquelle la surface relevée discrète est dans une forme choisie dans le groupe constitué de : (a) un parallélogramme arrondi (30) ayant une hauteur allant de 6.0 mm à 7,0 mm, une diagonale courte (31) allant de 6,5 mm à 7,5mm, et une diagonale longue (32) allant de 9,0 mm à 10,0 mm ; (b) une forme de barrique (40) ayant une largeur (41) allant de 2,7 mm à 3,7 mm, une base (43) allant de 1,0 mm à 2,0 mm, une hauteur (44) allant de 3,2 mm à 4,2 mm, et un col (41) allant de 0,5 mm à 1,5 mm ; (c) un morceau de tarte (50) ayant des longueurs de côté (52) allant de 2,0 mm à 3,0 mm et des longueurs de base (51) allant de 1,0 mm à 2,0 mm, et ayant un angle inclus (53) entre les deux côtés allant de 55° à 65°; (d) un rectangle ondule (60) ayant une longueur (62) de 4,0 mm à 5,0 mm et une largeur (61) allant de 1,5 mm à 2,5 mm.

6. Feuille de nettoyage non ouverte (5) selon l'une quelconque des revendications précédentes, qui comprend, en outre, une mousseline (20).

7. Feuille de nettoyage non ouverte (5) selon la revendication 6, dans laquelle la mousseline (20) est dérivée d'une polyolefine, choisie, de préférence, dans le groupe constitué de polypropylène, polyéthylène, éthyl vinyl acétate, et leurs mélanges.

8. Feuille de nettoyage non ouverte (5) selon l'une quelconque des revendications précédentes, ayant un additif appliqué à une faible teneur efficace, de préférence au moins 0,01%, plus préférablement au moins 1%, encore plus préférablement de 1% à 15%, et encore plus préférablement de 3 à 10% en poids de la feuille.

9. Feuille de nettoyage non ouverte (5) selon la revendication 10, dans laquelle l'additif est un mélange d'huile minérale et d'une cire.

10. Feuille de nettoyage non ouverte (5) selon l'une quelconque des revendications précédentes, où ladite feuille de nettoyage non ouverte jetable (5) peut être fixée à un ustensile de faible poids pour fournir un accès aisé à des emplacements qui sont difficiles à atteindre.

11. Ustensile de nettoyage **caractérisé en ce qu'**il comprend :
a. un manche ; et
b. une feuille de nettoyage amovible (5), dans lequel la feuille de nettoyage (5) est la feuille selon l'une quelconque des revendications précédentes.

12. Procédé pour nettoyer une surface **caractérisé en ce qu'**il comprend une mise en contact de la surface avec la face de travail de la feuille de nettoyage (5) selon l'une quelconque des revendications 1 à 10,

13. Procédé de fabrication d'une feuille de nettoyage non ouverte (5) selon l'une quelconque des revendications 1 à 10, **caractérisé par** un caractère tridimensionnel macroscopique non-aléatoire, comprenant l'étape consistant à enchevêtrer par voie hydraulique des fibres sur une ceinture de formage à dessins.

14. Article manufacturé **caractérisé en ce qu'**il comprend les feuilles de nettoyage non ouvertes (5) selon la revendication 1, les feuilles de nettoyage (5) étant contenues dans un conditionnement en association avec un mode d'emploi pour obtenir un effet bénéfique choisi dans le groupe constitué de :
- capture les salissures particulaires au contact tout en minimisant la dispersion desdites salissures dans l'air par comparaison avec des techniques normales d'époussetage;
- élimine davantage de salissures particulaires que des techniques normales d'époussetage ;
- élimine la matière particulaire invisible ;
- n'exige pas l'application d'un produit supplémentaire ;
- utilise une charge électrostatique pour capturer de très fines salissures particulaires;
- a une structure macroscopiquement tridimensionnelle pour capturer des particules relativement grandes ;
- fournit une innocuité pour la surface
- abaisse le niveau de matériau particulaire dans l'air ;
- réduit le niveau de salissures particulaires sur une surface ;
- capture les salissures particulaires au contact tout en minimisant la dispersion desdites salissures dans l'air par comparaison avec des techniques normales d'époussetage de façon à minimiser une inhalation desdites salissures particulaires et/ou la redéposition desdites salissures particulaires ;
- élimine davantage de salissures particulaires que des techniques normales d'époussetage de sorte que vos surfaces sont plus propres ;
- n'exige pas l'application d'un produit supplémentaire de sorte que le procédé est simplifié.
- exige moins d'effort par comparaison avec des techniques normales d'époussetage étant donné que les salissures particulaires sont plus complètement éliminées la première fois ;
- le procédé recueille davantage de salissures l'articulaires par comparaison avec des techniques normales d'époussetage de sorte qu'elles peuvent être éliminées de la maison ou autre zone ;
- entraîne une réduction des allergènes aéroportés ;
- entraîne une réduction des microbes pathogènes aéroportés; et
- leurs combinaisons ;
en utilisant la face de travail des feuilles sur une surface ayant un matériau particulaire dessus.

15. Article manufacturé **caractérisé en ce qu'**il comprend les feuilles de nettoyage non ouvertes (5) selon l'une quelconque des revendications 1 à 10, ayant été pliées de telle sorte que la face de travail (8) de la feuille (5) est sur l'extérieur telle que pliée, les feuilles de nettoyage (5) étant contenues dans un conditionnement en association avec un mode d'emploi pour déposer la feuille (5) sur une surface, puis déplier la feuille (5), puis placer la main ou le manche de l'ustensile sur la feuille (5), et procéder au nettoyage.

16. Feuille de nettoyage non ouverte (5) selon les revendications 1 a 10, **caractérisée en ce qu'**elle comprend une structure fabriquée à partir de fibres ayant un denier supérieur à environ 2,0 deniers.
